# EUROPÄISCHE PATENTSCHRIFT

(11) **EP 1 848 964 B1**
(45) Veröffentlichungstag und Bekanntmachung des Hinweises auf die Patenterteilung: **08.07.2015**
(21) Anmeldenummer: 06703609.5
(22) Anmeldetag: 18.01.2006
(51) Int. Cl.: G01C 21/34

(54) **VERFAHREN ZUR ROUTENBERECHNUNG FÜR NAVIGATIONSSYSTEME**
ROUTE CALCULATION METHOD FOR NAVIGATION SYSTEMS
PROCEDE DE CALCUL D'ITINERAIRE POUR DES SYSTEMES DE NAVIGATION

(30) Priorität: 31.01.2005 DE 102005004332
(43) Veröffentlichungstag der Anmeldung: 31.10.2007
(73) Patentinhaber: ROBERT BOSCH GMBH, 70442 Stuttgart (DE)
(72) Erfinder: MUELLER, Guido, 06484 Quedlinburg (DE); LAEDKE, Michael, 31134 Hildesheim (DE); KERSKEN, Ulrich, 31199 Diekholzen (DE); MATSCHKE, Irina, 30163 Hannover (DE)
(86) Internationale Anmeldenummer: PCT/EP2006/050267
(87) Internationale Veröffentlichungsnummer: WO 2006/082136

(56) Entgegenhaltungen:
- EP-A- 1 496 338
- DE-A1- 10 128 517
- DE-A1- 19 908 941
- US-A1- 2003 187 573

## Beschreibung

Die vorliegende Erfindung betrifft ein Verfahren zur Routenberechnung für Navigationssysteme bei dem Straßen eines Straßennetzes in mehrere Straßenklassen eingeteilt werden, denen klassenspezifisch Geschwindigkeitswerte zugeordnet werden, die bei der Routenberechnung zugrunde gelegt werden.

In derzeitigen Navigationssystemen werden Routen unter anderem auf Basis von fest definierten Geschwindigkeitswerten berechnet. Hierzu werden die in den digitalisierten Kartendaten gespeicherten Straßen je nach Beschaffenheit der einzelnen Straße in eine Straßenklasse eingeteilt. Für jede dieser Straßenklassen wird ein vordefinierter Geschwindigkeitswert als typische Durchschnittsgeschwindigkeit eines Kraftfahrzeugtyps, beispielsweise PKW, LKW etc., bei einem Befahren dieser Straße bestimmt, so dass für mehrere Straßenklassen unterschiedliche Geschwindigkeitswerte der Berechnung zugrunde gelegt werden.

Mit Straßenklasse oder -typ ist dabei die Einstufung der einzelnen Straßen bzw. Elemente gemeint, die das zu Grunde liegende Straßennetz entsprechend ihrer Funktion, der Nutzung und/oder den Umfeldbedingungen differenziert und mit entsprechenden Parametern, beispielsweise Kapazität, zulässige Höchstgeschwindigkeit etc., belegt. Bekannt ist beispielsweise eine siebenstufige Einteilung bei Blaupunkt, bei der in Deutschland die Stufe 1 einer Autobahn und die Stufe 2 einer Bundesstraße entspricht. Straßen der unteren Stufen entsprechen reinen lokalen Straßen, die nur als Abfahrts- bzw. Ankunftsort relevant sind.

Eine weitere Gliederung des Straßennetzes kann entsprechend den Richtlinien für die Anlage von Straßen, Teil: Leitfaden für die funktionale Gliederung des Straßennetzes (RAS-N) der Forschungsgesellschaft für Straßen- und Verkehrswesen, Köln 1988, vorgegeben. Hier werden den verschiedenen Straßen eine Kategorie und eine Verbindungsfunktionsstufe zugeordnet, die in einer Matrix miteinander verknüpft sind.

Auf diese Weise können beispielsweise außerhalb von bebauten Gebieten (außerorts) für eine Autobahn in Deutschland eine Durchschnittsgeschwindigkeit von 100 km/h und für eine Bundesstraße ein Geschwindigkeitswert von 80 km/h gesetzt werden. Für den innerörtlichen Straßenverkehr können beispielsweise die Geschwindigkeitswerte 60 km/h und 35 km/h angenommen werden. Diese beispielhaft definierten Geschwindigkeitswerte werden in den Navigationssystemen zur Routenberechnung für die jeweiligen Straßenklassen zugrunde gelegt.

In der Realität variieren die Durchschnittsgeschwindigkeiten für die entsprechenden Straßenabschnitte aber erheblich, da sich beispielsweise in Abhängigkeit von der Tageszeit unterschiedliche Auslastungsgrade der Strecken und demnach auch unterschiedliche mittlere Geschwindigkeiten ergeben. Im innerstädtischen Bereich ist dieser Effekt besonders deutlich ausgeprägt und wird allgemein mit Berufsverkehr bezeichnet.

Es besteht nun die Möglichkeit, durch Verkehrsmeldungen, beispielsweise TMC-Meldungen über FM/RDS, für einzelne Streckenabschnitte Störungen des Verkehrsflusses zu berücksichtigen, also eine so genannte dynamisierte Routenberechnung vorzunehmen. Dies ist jedoch nur für einzelne Ereignisse sinnvoll und möglich, da einerseits nicht flächendeckend die Verkehrslage erfasst werden kann und andererseits die funktechnische Übertragung zu den Kraftfahrzeugen nicht unerhebliche Übertragungskosten verursacht. Weiterhin sind die Datenmengen für eine flächendeckende Berücksichtigung in der Größenordnung, dass eine sichere und zeitgerechte Übertragung nicht mehr zuverlässig zu gewährleisten ist.

In der DE 197 24 919 A1 ist ein Verfahren zum Erzeugen, Verschmelzen und Aktualisieren von in einem Zielführungssystem bzw. Navigationssystem nutzbaren Daten offenbart. Bei diesen Verfahren wird selbsttätig eine Wegstreckendatei erzeugt. In dieser generiert sich ein Wegenetz, das die von einem Nutzer, beispielsweise in einem Kraftfahrzeug, zurückgelegten Fahrtstrecken abbildet und in einem Speicher ablegt. Zusätzlich werden die für die entsprechenden Fahrtabschnitte gebrauchten Fahrtdauern abgespeichert. Das System ist somit in der Lage, strecken- und tageszeitabhängig für benutzte Streckenabschnitte des Wegenetzes Abweichungen von den durchschnittlichen, konstanten Geschwindigkeitswerten zu ermitteln und für zukünftige Routenberechnungen zu berücksichtigen.

Bei diesen Verfahren werden allerdings nur tageszeitspezifische Geschwindigkeitswerte von abgefahrenen Straßen verwendet, d.h. die Erfassung der Fahrtdaten erfolgt individuell für jede Straße bzw. für jeden Streckenabschnitt einzeln. Sollen bei praktischer Umsetzung des Verfahrens dynamische Fahrtzeiten verwendet werden, müssen flächendeckend für das entsprechende Gebiet diese Informationen vorliegen. Werden die Daten nur lückenhaft erfasst, besteht die Gefahr von inkonsistenten Routenberechnungen.

In der DE 10 2004 015 880 A1 wird ein Reisezeit-Berechnungsverfahren und ein Verkehrsinformations-Anzeigeverfahren für eine Navigationsvorrichtung offenbart. Ein relevantes Merkmal der hier beschriebenen Navigationsvorrichtung sieht vor, dass statistische Daten einschließlich Reisezeit und Bewegungsgeschwindigkeit gespeichert werden, die durch in der Vergangenheit aufgenommene statistische Verkehrsinformationswerte für jede der Verbindungen bestimmt werden. Diese gespeicherten Daten werden bei zukünftigen Routenberechnungen berücksichtigt. Auch bei dieser Navigationsvorrichtung erfolgt die Datenerfassung für einzelne, ausgewählte Streckenabschnitte und eine flächendeckende Datensammlung ist nicht vorgesehen.

Aus der DE 10128517 A1 geht ein Verfahren zum Erzeugen von Navigationsdaten für eine Routenführung sowie ein Navigationssystem hervor.

Vor diesen Hintergrund ist es die Aufgabe der vorliegenden Erfindung, ein Verfahren zur Routenberechnung für Navigationssysteme derart bereitzustellen, dass flächendeckend eine konsistente Routenberechnung durchgeführt werden kann.

Diese Aufgabe wird durch ein Verfahren gemäß Anspruch 1 gelöst. Die für die Routenberechnung erforderlichen durchschnittlichen

Geschwindigkeitswerte werden nicht mehr als konstant angenommen, sondern können bedarfsabhängig variieren.

Bei dem erfindungsgemäßen Verfahren erfolgt die Erfassung bzw. Zuordnung des variierenden Geschwindigkeitswerts nicht für jede Straße einzeln, sondern straßenklassenspezifisch. Das heißt, es werden beispielsweise Fahrtzeiten stichprobenartig für einige wenige Straßen in jeder Straßenklasse erhoben und aus diesen Stichproben bzw. unter möglicher Heranziehung weiterer Informationen generalisierte Geschwindigkeits- bzw. Reisezeitganglinien abgeleitet. Diese Daten könnten dann auch an anderen Streckenabschnitten verwendet werden, an denen keine Stichproben erhoben worden sind.

Die praktische Erfassung der Stichproben pro Straßenklasse, die straßenklassenspezifische Aufbereitung und flächendeckende Hinterlegung ist weit weniger aufwendig als die durchschnittliche Geschwindigkeitserfassung in bekannten Verfahren, bei denen jede Straße fahrzeugtechnisch erfasst wird und diese Daten dann zusammengefügt werden müssen. Ferner bietet das erfindungsgemäße Verfahren den Vorteil, eine Konsistenz innerhalb der Klassifizierung des Straßennetzes zu erhalten.

Bevorzugt werden in einer erfindungsgemäßen Ausführungsform bei dem Zuordnen der Geschwindigkeitswerte für zumindest eine der Straßenklassen tageszeitabhängige Differenzierungen der Geschwindigkeitswerte vorgenommen. Auf diese Weise können tägliche, regelmäßig den Verkehrfluss beeinträchtigende Randbedingungen, beispielsweise der Berufsverkehr oder sonstige Stoßzeiten, berücksichtigt werden, indem zu diesen Zeitpunkten ein anderer, angepasster Geschwindigkeitswert angenommen wird.

Eine vorteilhafte Weiterführung des Erfindungsgedankens sieht vor, dass bei dem Zuordnen der Geschwindigkeitswerte zusätzlich wochentagsabhängige Differenzierungen der Geschwindigkeitswerte vorgenommen werden. Dies eröffnet die Möglichkeit, für Sonn- und Feiertage, an denen erfahrungsgemäß ein geringeres Verkehrsaufkommen vorhanden ist, höhere Durchschnittsgeschwindigkeiten bei der Routenberechnung zu berücksichtigen.

Eine weitere vorteilhafte Ausführung des erfindungsgemäßen Verfahrens sieht vor, dass bei dem Zuordnen der Geschwindigkeitswerte zusätzlich jahreszeitabhängige und/oder saisonale Differenzierungen der Geschwindigkeitswerte vorgenommen werden. Dies eröffnet die Möglichkeit, beispielsweise jahreszeitbedingte Witterungsverhältnisse, die eine angepasste Fahrweise erfordern und somit Ursachen einer reduzierten Durchschnittsgeschwindigkeit sein können, bei der Routenberechnung zu berücksichtigen. Beispiele für saisonale Ereignisse sind Ferienzeiten oder spezielle Feiertage mit so genannten Brückentagen, aber auch besondere Veranstaltungen wie Messen oder Volksfeste.

Das erfindungsgemäße Verfahren sieht vor, dass bei dem Zuordnen der Geschwindigkeitswerte zusätzlich fahrtrichtungsabhängige Differenzierungen der Geschwindigkeitswerte vorgenommen werden. Dies eröffnet die Möglichkeit die Hauptnutzungsrichtung in einer Hauptverkehrszeit zu berücksichtigen. Diese ist beispielsweise am Morgen in Richtung des Stadtzentrums gerichtet und bedingt daher größere Verkehrsbelastungen und somit andere Geschwindigkeitswerte als zur gleichen Zeit stadtauswärts.

In vorteilhafter Weise werden die fahrtrichtungsabhängigen Differenzierungen der Geschwindigkeitswerte in Abhängigkeit der Anzahl der Fahrstreifen vorgenommen. Alternativ oder zusätzlich werden die fahrtrichtungsabhängigen Differenzierungen der Geschwindigkeitswerte vorgenommen, wenn bei einer Straße eine bauliche Trennung der entgegengesetzten Fahrtrichtungen vorgesehen ist. Weiterhin werden die Differenzierungen alternativ oder zusätzlich vorgenommen, wenn eine Straße planfrei (kreuzungsfrei) bzw. teilplanfrei ausgebaut ist. Aufgrund der beispielhaft aufgeführten bautechnischen Maßnahmen besteht die Möglichkeit, die Straßen innerhalb einer Straßenklasse als richtungsrelevant zu charakterisieren.

Erfindungsgemäß wird in dem Straßennetz zumindest ein abgegrenztes Fokusgebiet und ein an dieses angrenzendes Einzugsgebiet definiert, so dass bei Routen, die von einem der Gebiete in das jeweils andere führen, die fahrtrichtungsabhängigen Differenzierungen vorgenommen werden können. Hierdurch wird eine automatische Auswahl ermöglicht, die die Anwendung auch für große Straßennetze praktikabel macht.

Die fahrtrichtungsabhängigen Differenzierungen können in vorteilhafter Weise vorgenommen werden, wenn die Route innerhalb eines definierten Segmentes des Straßennetzes liegt. Alternativ oder zusätzlich können die fahrtrichtungsabhängigen Differenzierungen vorgenommen werden, wenn die Routenlänge einer definierten Toleranzlänge nicht überschreitet und die Toleranzlänge abhängig von der direkten Verbindungslinie zwischen Start- und Zielpunkt der Route ist.

Nachfolgend wird die vorliegende Erfindung an Hand von Ausführungsbeispielen und den beigefügten Zeichnungen beispielhaft näher erläutert. Diese zeigen in:
Figuren 1a bis c drei grafisch aufgetragene Beispiele für erfindungsgemäße Geschwindigkeitswerte in Abhängigkeit der Tageszeit;
Figuren 2a bis b jeweils einen Teilbereich eines Straßennetzes mit einem Fokusgebiet und einem Einzugsgebiet;
Figur 3 einen Teilbereich eines Straßennetzes mit zwei Fokusgebieten; und
Figuren 4a bis b zwei Beispiele für einen Routenvorschlag ohne bzw. mit Geschwindigkeitswertdifferenzierung.

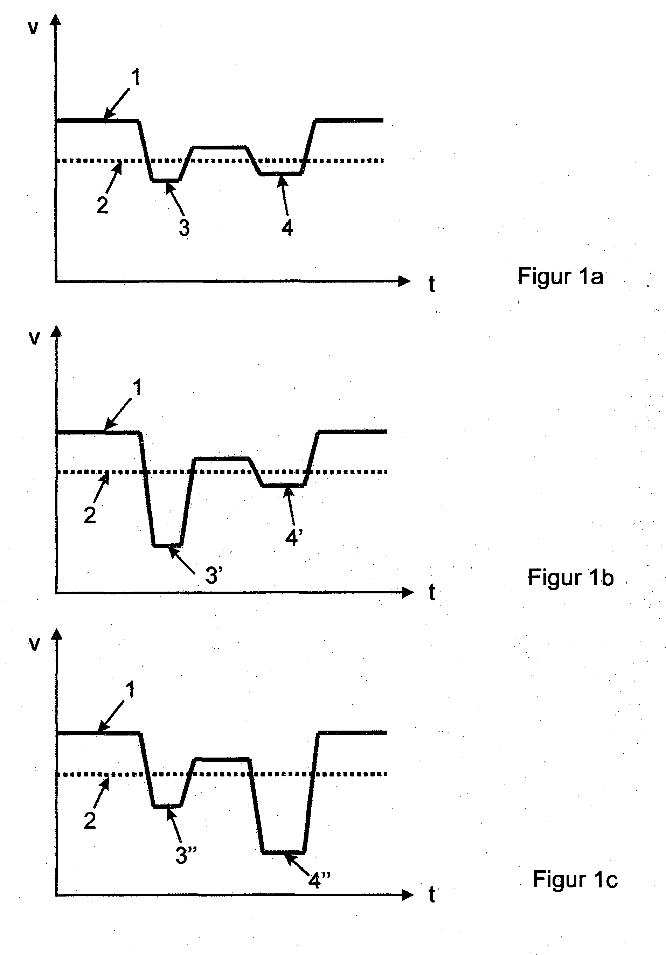

In der Figur 1a sind erfindungsgemäße tageszeitabhängige Geschwindigkeitswerte schematisch in einer über die Zeit aufgetragenen Geschwindigkeitsganglinie 1 dargestellt. Der bisher übliche, fixierte Geschwindigkeitswert ist als Punktlinie 2 zum direkten Vergleich eingezeichnet. Der bisherige Geschwindigkeitswert 2 verbleibt über den gesamten Tagesverlauf konstant auf einem Wert. Die Geschwindigkeitsganglinie 1 weist in den Nachtstunden, das heißt in den Randbereichen der grafischen Darstellung, einen höheren Geschwindigkeitswert auf, da aufgrund des geringeren Verkehrsaufkommens ein höherer Durchschnittswert der Fahrtgeschwindigkeit erreicht werden kann.

Das erste Geschwindigkeitsminimum wird in der morgendlichen Hauptverkehrszeit erreicht und ist in der Figur mit der Bezugsziffer 3 gekennzeichnet. Im weiteren Verlauf des Tages ist wieder eine höhere Durchschnittsgeschwindigkeit möglich, um dann in der nachmittäglichen Hauptverkehrszeit 4 erneut auf einen minimalen Geschwindigkeitswert herab zu fallen. Die Geschwindigkeitsganglinie ist im Wesentlichen W-förmig.

Die tageszeitliche Veränderung ist aber nicht auf den Straßen in allen Straßenklassen gleich geartet. Beispielsweise treten auf einer innerstädtischen Hauptverkehrsstraße generell ausgeprägtere Belastungsspitzen (morgendliche und abendliche Hauptverkehrszeit) auf und demnach auch deutlichere Geschwindigkeitsvariationen als auf einer Autobahn. Aus diesem Grund werden für jede Straßenklasse spezifische Geschwindigkeitsganglinien mit unterschiedlichen maximalen und minimalen Durchschnittsgeschwindigkeitswerten definiert.

Neben der tageszeitlichen Geschwindigkeitsausprägung in den einzelnen Straßenklassen sind auch Differenzierungen innerhalb einer Straßenklasse bzw. einer Fahrtstrecke möglich. Dazu wird die ebenfalls von der Tageszeit abhängige Hauptnutzungsrichtung einer Strecke betrachtet. Insbesondere in städtischen Verkehrsnetzen ergeben sich aufgrund der Anziehungswirkung des Stadtzentrums bzw. Fokusgebietes, hervorgerufen durch die örtliche Lage der Arbeitsplätze bzw. des Einzelhandels, vormittags bzw. entgegengesetzt am Nachmittag unterschiedlich ausgeprägte Belastungsverteilungen. Diese wirken sich entsprechend auf die Geschwindigkeitswerte aus. Beispiele hierfür sind in den nachfolgend beschriebenen Figuren 1b und 1c dargestellt.

In beiden Figuren 1b und 1c ist der bisher übliche Geschwindigkeitswert, der über den Tagesverlauf konstant bleibt, erneut als Punktlinie 2 dargestellt. Die Figur 1b gibt die Geschwindigkeitswerte für eine Straße mit Fahrtrichtung zu dem Fokusgebiet wieder. Hier ist der Geschwindigkeitswert 3' deutlich niedriger als der entsprechende Geschwindigkeitswert 3 in der Figur 1a. Der Figur 1c ist zu entnehmen, dass zum gleichen Zeitpunkt die entgegengesetzte Fahrtrichtung, das heißt die Fahrtrichtung aus dem Fokusgebiet heraus, mit einem Geschwindigkeitswert 3" versehen ist, der in diesem Beispiel etwa dem Geschwindigkeitswert 3 aus der Figur 1a entspricht.

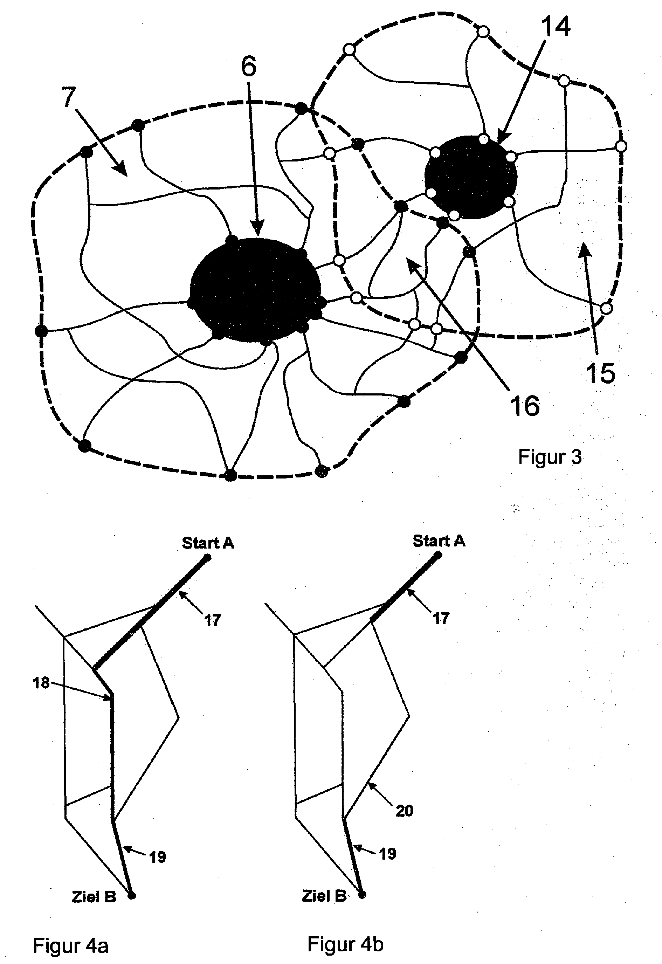

Bei der nachmittäglichen Hauptverkehrszeit ist das Verhältnis der Geschwindigkeitswerte 4' aus der Figur 1b und 4" aus der Figur 1c umgekehrt. Denn hier ist die Fahrtrichtung aus dem Fokusgebiet heraus die Hauptnutzungsrichtung mit dem größeren Verkehrsaufkommen. Deshalb ist hier der Geschwindigkeitswert 4" niedriger anzusetzen. Zu der gleichen Zeit weist der Geschwindigkeitswert 4' in der Figur 1b, also in Fahrtrichtung entgegengesetzt der Hauptfahrtrichtung, einen Wert auf, der zwar noch niedriger als der bisherige Geschwindigkeitswert, aber deutlich größer als der Geschwindigkeitswert 4" auf der Gegenfahrbahn ist. Aus den Figuren 1b und 1c wird deutlich, dass bei Berücksichtigung der Fahrtrichtung neben den tageszeitlichen Variationen eine der Realität näher kommende Geschwindigkeitswertzuordnung möglich ist.

Da das Attribut des Richtungsbezugs eine Differenzierung vorsieht, die nicht für eine Straßenklasse in gleicher Weise gilt, bestehen mehrere Möglichkeiten, diese Ausprägung bei relevanten Streckenabschnitten zu ergänzen. Zum einen ist eine manuelle Auswahl und entsprechende Belegung einzelner Elemente denkbar, was jedoch der sonstigen Ausrichtung des Verfahrens, insbesondere für gesamte Netze in vertretbarem Aufwand anwendbar zu sein, nicht gerecht wird. Zum anderen besteht die Möglichkeit eine bestimmte Gruppe innerhalb einer Straßenklasse auszuwählen, die sich durch ein Merkmal auszeichnet, das als Indiz, wie beispielsweise die bauliche Trennung der Richtungsfahrbahnen, für eine ausgeprägte Richtungsbelastung herangezogen werden kann.

Die Zuweisung, in welche Richtung aufgrund der morgendlichen bzw. abendlichen Hauptbelastungsrichtung der einzelne Straße dabei der Verkehrsfluss tageszeitabhängig gerichtet ist, erfolgt bei dieser Auswahlsystematik allerdings noch nicht automatisch. Diese Vorgehensweise bietet aber bereits den Vorteil, eine Konsistenz in der Klassifizierung über das gesamte Straßennetz zu wahren.

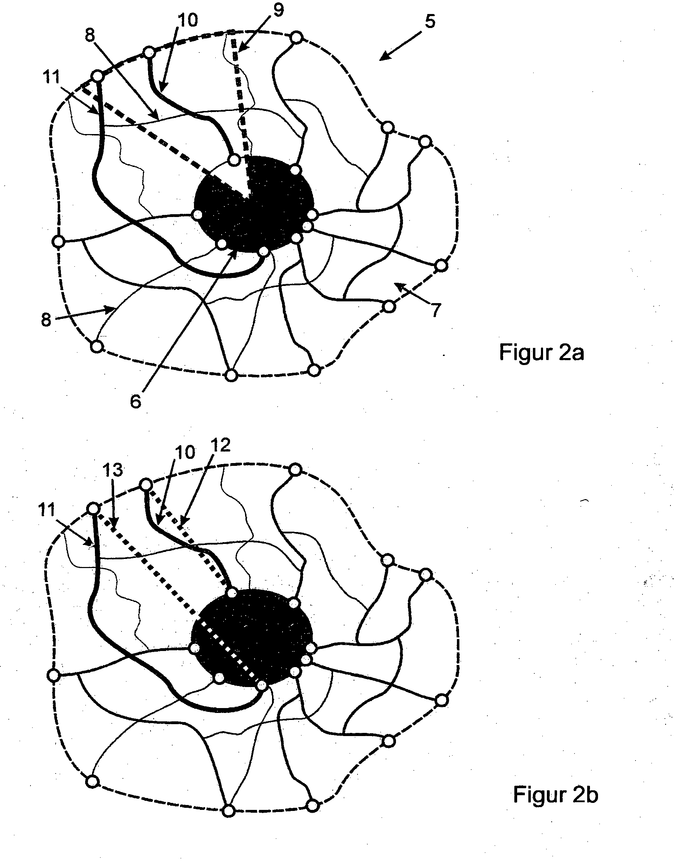

Unter Bezug auf die Figuren 2a und 2b wird die Möglichkeit eines automatischen Auswahlverfahrens erläutert, das die Anwendung auch für große Straßennetze praktikabel macht. Die Figur 2a zeigt einen Ausschnitt eines Straßennetzes 5 in dem ein Fokusgebiet 6 definiert ist. Dies bedeutet, dass zunächst das Gebiet, von dem die anziehende Wirkung ausgeht, beispielsweise ein Stadtzentrum bzw. eine Innenstadt, ordentlich von anderem Gebiet abgegrenzt wird, beispielsweise von dem übrigen Stadtgebiet bzw. dem Stadtrand. Innerhalb des Fokusgebiets 6 wird keine Richtungsdifferenzierung vorgenommen, da angenommen wird, dass sich der Verkehr hier nur noch entsprechend der unterschiedlichen Einzelziele verteilt, aber keine gemeinsame Hauptrichtung mehr auszumachen ist.

Ferner wird ein an das Fokusgebiet 6 angrenzendes Einzugsgebiet 7 definiert, für das überhaupt eine tageszeitabhängige Belastungsrichtung angenommen werden kann, beispielsweise das übrige Stadtgebiet. Die Abgrenzung der einzelnen Gebiete 6, 7 kann dabei auf Grundlage spezieller Ortskenntnis, einzelner Attribute, beispielsweise bebaute Flächen, Kerngebiete entsprechend des Flächennutzungsplans etc., oder aber durch Definierung von Einzugsradien festgelegt werden.

Eine Systematik zur Bestimmung dieses Attributs kann erfolgen, wenn die Ränder des richtungsrelevanten Einzugsgebiets 7 und des Fokusgebiets 6 nach Straßen abgesucht werden, die diese Ränder schneiden. Hierbei müssen jedoch nicht alle Straßen berücksichtigt werden, sondern in vorteilhafter Weise werden nur diese berücksichtigt, die aufgrund ihrer Funktion überhaupt als "Einfallstraßen" fungieren können. Dies können Straßenklassen sein, die nach der bekannten Stufeneinteilung die Stufe Hauptstraße oder höher aufweisen. Dies führt beispielsweise dazu, dass die in der Figur 2a dünn eingezeichneten Straßen 8 keine fahrtrichtungsabhängigen Differenzierungen der zugeordneten Geschwindigkeitswerte erfahren.

Zwischen den identifizierten Schnittpunkten des Einzugsgebiets 7 und des Fokusgebiets 6 wird eine Routensuche angestoßen und mögliche Fahrtwege identifiziert. Es werden aber nur die gefundenen Straßen mit den Richtungsattributen belegt, die eine möglichst direkte Verbindung darstellen. Bestimmt werden kann dies beispielsweise über eine Festlegung eines Segmentes, in der Figur dargestellt durch eine Strichlinie 9. Der Start- bzw. Endpunkt sowie die Route selber müssen sich dann innerhalb dieses Segmentes befinden. In der Figur 2a wird somit die Route 10 fahrtrichtungsabhängig differenziert, wohingegen die Route 11 keine fahrtrichtungsabhängigen Differenzierungen der zugeordneten Geschwindigkeitswerte erfährt.

Eine andere Möglichkeit besteht darin, das Verhältnis der Routenlänge zu der Länge der Luftlinie zwischen Startpunkt und Zielpunkt der Route zu betrachten. Die Figur 2b zeigt für die Route 10 die zugeordnete, gestrichelt angedeutete Luftlinie 12 sowie für die Route 11 die zugeordnete, gestrichelt angedeutete Luftlinie 13. Nun kann durch Festlegung einer Toleranzlänge, beispielsweise die um einen bestimmten Faktor multiplizierte Länge der Luftlinienverbindung 12 bzw. 13, bestimmt werden, ob eine Route fahrtrichtungsabhängige Differenzierungen der zugeordneten Geschwindigkeitswerte erfährt. Überschreitet die Länge einer vorgeschlagenen Route die ermittelte Toleranzlänge, findet keine fahrtrichtungsabhängige Differenzierung statt.

Bei den in den Figuren 2a und 2b dargestellten Beispielen wird jeweils die vorgeschlagene Route 10 eine fahrtrichtungsabhängige Differenzierung der Geschwindigkeitswerte berücksichtigen. Die Route 11 erfährt unabhängig von dem Auswahlkriterium keine fahrtrichtungsanhängigen Differenzierungen der zugeordneten Geschwindigkeitswerte.

Figur 3 zeigt nun einen Ausschnitt des Straßennetzes mit zwei Fokusgebieten 6 und 14. Jedes Fokusgebiet 6, 14 weist jeweils ein an dieses angrenzendes Einzugsgebiet 7 bzw. 15 auf. Diese gezeigte Situation stellt somit einen Sonderfall mit Überlagerung zweier Einzugsgebiete dar, wie es etwa im polyzentrischen Räumen häufig der Fall ist. Hierbei sind die zuvor geschriebenen Attributierungsmöglichkeiten ebenfalls anwendbar. Nur sind die Elemente, die im Überschneidungsgebiet 16 beider oder mehrerer richtungsrelevanter Gebiete 7, 15 liegen, nicht mit einem Richtungsbezug zu versehen. Sind die einzelnen Anziehungspunkte 6, 14 aber nicht gleich stark anziehend anzusehen, beispielsweise aufgrund einer Einstufung der Gewichtung eines Stadtzentrums entsprechend des Zentralen Orte Konzepts, so ist dennoch eine Richtungsattributierung möglich, die entsprechend des Anziehungspotentials weiter differenziert ist.

Mit Bezug auf die Figur 4a wird ein vereinfachtes Beispiel für eine Routenberechnung angegeben. Ein Nutzer möchte von Start A nach dem Ziel B fahren. Das Navigationssystem berechnet eine Route, dessen Verlauf über die unterschiedlichen Straßenabschnitte 17, 18 und 19 führt. Der Straßenabschnitt 17 entspricht in diesem Beispiel einer Autobahn der Stufe 1 und die Abschnitte 18 und 19 einer Hauptstraße der Stufe 2. Die Vorberechnung der Gesamtreisezeit auf Basis der in den heutigen Navigationsgeräten festen Geschwindigkeitswerte für die einzelnen Straßenklassen ergibt eine Gesamtreisezeit von 20 Minuten, um von dem Start A an das Ziel B zu gelangen.

Bei Verwendung der erfindungsgemäßen Routenberechnung ergeben sich differenzierte Reisezeiten für die angezeigte Route, die in der nachfolgenden Tabelle 1 wiedergegeben sind.

| Fahrtrichtung | Fahrtbeginn | heutige Bestimmung gemittelt, nicht tageszeit- bzw. richtungsabhängig | Erfindungsgemäße Differenzierung | |
|---|---|---|---|---|
| | | | tageszeiabhängig | richtungsabhägig |
| A→B | | | | |
| 8.00 Uhr | | 20 | 22 | Einzelanwendung nicht sinnvoll |
| 22.00 Uhr | | | 19 | |
| 8.00 Uhr | | | 23 | |
| 22.00 Uhr | | | 19 | |
| B→A | | | | |
| 8.00 Uhr | | 20 | 22 | Einzelanwendung nicht sinnvoll |
| 22.00 Uhr | | | 19 | |
| 8.00 Uhr | | | 21 | |
| 22.00 Uhr | | | 19 | |

Bei Verwendung der tageszeitlich differenzierten Geschwindigkeitswerte wird die Gesamtreisezeit mit 22 Minuten bestimmt, da der Startpunkt der Fahrt um 8.00 Uhr liegt und für die einzelnen Straßenklassen im tageszeitlichen Vergleich aufgrund des höheren Verkehrsaufkommens zu dieser morgendlichen Spitzenstundenzeit niedrigere Geschwindigkeitswerte angesetzt werden. Dagegen wird für die gleiche Route bei Startbeginn um 22.00 Uhr eine Gesamtreisezeit von 19 Minuten ermittelt.

Wird neben der Tageszeit auch die Hauptnutzungsrichtung der Strecke berücksichtigt, ergibt sich für den Zeitpunkt 8.00 Uhr und Fahrt "stadteinwärts", also von A nach B, eine Gesamtreisezeit von 23 Minuten. Zur gleichen Zeit würde ein Nutzer "stadtauswärts", also von B nach A, jedoch nur 21 Minuten benötigen, da hier aufgrund der Fahrtrichtung entgegen der Hauptbelastungsrichtung mit einem höheren Geschwindigkeitsverlauf zu rechnen ist.

Durch Anwendung des erfindungsgemäßen Verfahrens kann die Fahrtroute optimiert werden, wie in der Figur 4b gezeigt ist. Der Routenvorschlag, bestimmt auf Basis fester Geschwindigkeitswerte für die einzelnen Straßenklassen, sieht den in der Figur 4a gezeigten Streckenverlauf vor. Hier ergibt sich eine Fahrtzeit von 20 Minuten. Bei Verwendung der differenzierten Geschwindigkeitswerte, beispielsweise aufgrund kombinierter Anwendung von tageszeit- und richtungsabhängiger Differenzierung, wird bei einem Reisebeginn um 11.30 Uhr ebenfalls diese Route als die günstigste bestimmt. Hier beträgt dann die Fahrtzeit etwa 21 Minuten.

Dagegen wird bei einem Fahrtantritt um 7.30 Uhr eine andere Alternative über die Abschnitte 17, 20 und 19 als günstigere Route angegeben. Durch die Berücksichtigung der unterschiedlich stark schwankenden Geschwindigkeitsausprägung auf den einzelnen Straßenklassen wird auf der Route gemäß der Figur 4b eine Fahrtzeit von 22 Minuten berechnet. Die Fahrtzeit zu diesem Tageszeitpunkt entlang der Route gemäß Figur 4a würde dem gegenüber 24 Minuten betragen, also 2 Minuten länger dauern.

## Patentansprüche

1. Verfahren zur Routenberechnung für Navigationssysteme bei dem Straßen (8) eines Straßennetzes (5) in mehrere Straßenklassen eingeteilt werden, denen klassenspezifisch Geschwindigkeitswerte zugeordnet werden, die bei der Routenberechnung zugrunde gelegt werden, wobei bei dem Zuordnen der Geschwindigkeitswerte für zumindest eine der Straßenklassen zeitabhängige Differenzierungen der Geschwindigkeitswerte vorgenommen werden, und bei dem Zuordnen der Geschwindigkeitswerte zusätzlich fahrtrichtungsabhängige Differenzierungen der Geschwindigkeitswerte vorgenommen werden, **dadurch gekennzeichnet, dass** in dem Straßennetz (5) zumindest ein abgegrenztes Fokusgebiet (6, 14) und ein an dieses angrenzendes Einzugsgebiet (7,15) definiert werden, und dass bei zumindest einer der Routen (10, 11), die von einem der Gebiete in das jeweils andere führen, die fahrtrichtungsabhängigen Differenzierungen der Geschwindigkeitswerte vorgenommen werden.

2. Verfahren nach Anspruch 1, **dadurch gekennzeichnet, dass** bei dem Zuordnen der Geschwindigkeitswerte tageszeitabhängige Differenzierungen der Geschwindigkeitswerte vorgenommen werden.

3. Verfahren nach Anspruch 1 oder 2, **dadurch gekennzeichnet, dass** bei dem Zuordnen der Geschwindigkeitswerte zusätzlich wochentagsabhängige Differenzierungen der Geschwindigkeitswerte vorgenommen werden.

4. Verfahren nach einem der vorstehenden Ansprüche, **dadurch gekennzeichnet, dass** bei dem Zuordnen der Geschwindigkeitswerte zusätzlich jahreszeitabhängige und/oder saisonale Differenzierungen der Geschwindigkeitswerte vorgenommen werden.

5. Verfahren nach einem der Ansprüche 1 bis 4, **dadurch gekennzeichnet, dass** die fahrtrichtungsabhängigen Differenzierungen der Geschwindigkeitswerte in Abhängigkeit der Anzahl der Fahrstreifen vorgenommen werden.

6. Verfahren nach einem der Ansprüche 1 bis 5, **dadurch gekennzeichnet, dass** die fahrtrichtungsabhängigen Differenzierungen der Geschwindigkeitswerte vorgenommen werden, wenn bei einer Straße (8) die entgegengesetzten Fahrtrichtungen baulich getrennt sind.

7. Verfahren nach einem der Ansprüche 1 bis 5, **dadurch gekennzeichnet, dass** die fahrtrichtungsabhängigen Differenzierungen der Geschwindigkeitswerte vorgenommen werden, wenn eine Straße (8) planfrei (kreuzungsfrei) bzw. teilplanfrei ausgebaut ist.

8. Verfahren nach einem der Ansprüche 1 bis 7, **dadurch gekennzeichnet, dass** die fahrtrichtungsabhängigen Differenzierungen der Geschwindigkeitswerte vorgenommen werden, wenn die Route (10, 11) innerhalb eines definierten Segmentes des Straßennetzes (5) liegt.

9. Verfahren nach einem der Ansprüche 1 bis 8, **dadurch gekennzeichnet, dass** die fahrtrichtungsabhängigen Differenzierungen der Geschwindigkeitswerte vorgenommen werden, wenn die Routenlänge eine definierte Toleranzlänge nicht überschreitet und die Toleranzlänge abhängig von der direkten Verbindungslinie zwischen Start- und Zielpunkt der Route ist.

## Claims

1. Method for route computation for navigation systems in which roads (8) in a road network (5) are divided into a plurality of road classes to which speed values are assigned on a class-specific basis, said speed values being taken as a basis for the route computation, wherein the assignment of the speed values for at least one of the road classes involves time-dependent differentiations for the speed values being performed, and the assignment of the speed values additionally involves direction-of-travel-dependent differentiations for the speed values being performed, **characterized in that** at least one demarcated area of focus (6, 14) and a commuting area (7, 15) adjoining the latter are defined in the road network (5), and **in that** the direction-of-travel-dependent differentiations for the speed values are performed in the case of at least one of the routes (10, 11) that lead from one of the areas to the other.

2. Method according to Claim 1, **characterized in that** the assignment of the speed values involves time-of-day-dependent differentiations for the speed values being performed.

3. Method according to Claim 1 or 2, **characterized in that** the assignment of the speed values additionally involves day-of-the-week-dependent differentiations for the speed values being performed.

4. Method according to one of the preceding claims, **characterized in that** the assignment of the speed values additionally involves season-dependent and/or seasonal differentiations for the speed values being performed.

5. Method according to one of Claims 1 to 4, **characterized in that** the direction-of-travel-dependent differentiations for the speed values are performed on the basis of the number of lanes.

6. Method according to one of Claims 1 to 5, **characterized in that** the direction-of-travel-dependent differentiations for the speed values are performed when the opposite directions of travel of a road (8) are physically separate.

7. Method according to one of Claims 1 to 5, **characterized in that** the direction-of-travel-dependent differentiations for the speed values are performed when a road (8) has been developed with grade separation (no junctions) or partial grade separation.

8. Method according to one of Claims 1 to 7, **characterized in that** the direction-of-travel-dependent differentiations for the speed values are performed when the route (10, 11) is within a defined segment of the road network (5).

9. Method according to one of Claims 1 to 8, **characterized in that** the direction-of-travel-dependent differentiations for the speed values are performed when the route length does not exceed a defined tolerance length and the tolerance length is dependent on the direct connecting line between the start and destination of the route.

## Revendications

1. Procédé de calcul d'itinéraire dans des systèmes de navigation, dans lequel les routes (8) d'un réseau routier (5) sont divisées en plusieurs classes de routes auxquelles des valeurs de vitesse spécifiques aux classes sont associées et sont utilisées pour le calcul des itinéraires, des différentiations des valeurs de vitesse en fonction du temps étant réalisées pour au moins l'une des classes de route lors de l'attribution des valeurs de vitesse, des différentiations des valeurs de vitesse en fonction de la direction de déplacement étant de plus réalisées lors de l'attribution des valeurs de vitesse, **caractérisé en ce que**
au moins un domaine délimité de focalisation (6, 14) et un domaine adjacent de référence (7, 15) sont définis dans le réseau routier (5) et
**en ce que** les différentiations des valeurs de vitesse en fonction de la direction de déplacement sont réalisées pour au moins l'un des itinéraires (10, 11) qui conduisent d'un des domaines à l'autre.

2. Procédé selon la revendication 1, **caractérisé en ce que** dans l'attribution des valeurs de vitesse, des différentiations des valeurs de vitesse en fonction de l'heure du jour sont réalisées.

3. Procédé selon les revendications 1 ou 2, **caractérisé en ce que** dans l'attribution des valeurs de vitesse, des différentiations des valeurs de vitesse en fonction du jour de la semaine sont de plus réalisées.

4. Procédé selon l'une des revendications précédentes, **caractérisé en ce que** dans l'attribution des valeurs de vitesse, des différentiations des valeurs de vitesse en fonction de la saison et/ou saisonnières sont de plus réalisées.

5. Procédé selon l'une des revendications 1 à 4, **caractérisé en ce que** les différentiations des valeurs de vitesse en fonction de la direction du déplacement sont réalisées en fonction du nombre des voies de circulation.

6. Procédé selon l'une des revendications 1 à 5, **caractérisé en ce que** les différentiations des valeurs de vitesse en fonction du sens de déplacement sont réalisées si les sens de déplacement opposés sont séparés structurellement sur une route (8).

7. Procédé selon l'une des revendications 1 à 5, **caractérisé en ce que** les différentiations des valeurs de vitesse en fonction du sens de déplacement sont réalisées si une route (8) est dépourvue de carrefour ou partiellement dépourvue de carrefours.

8. Procédé selon l'une des revendications 1 à 7, **caractérisé en ce que** les différentiations des valeurs de vitesse en fonction de la direction de déplacement sont réalisées si l'itinéraire (10, 11) est situé à l'intérieur d'un segment défini du réseau routier (5).

9. Procédé selon l'une des revendications 1 à 8, **caractérisé en ce que** les différentiations des valeurs de vitesse en fonction du sens de déplacement sont réalisées si la longueur de l'itinéraire ne dépasse pas une longueur de tolérance définie, la longueur de la tolérance dépendant de la ligne de liaison directe entre le point de départ et le point d'arrivée de l'itinéraire.
